# EUROPÄISCHE PATENTSCHRIFT

(11) **EP 2 886 483 B1**
(45) Veröffentlichungstag und Bekanntmachung des Hinweises auf die Patenterteilung: **05.10.2016**
(21) Anmeldenummer: 13197789.4
(22) Anmeldetag: 17.12.2013
(51) Int. Cl.: B65D 25/08, B65D 81/32, B65D 81/38, B65D 81/34, A47J 27/122

(54) **Behälter zur Aufbewahrung und Zubereitung von Nahrungsmitteln**
Container for storing and preparing food stuffs
Récipient de conservation et de préparation de produits alimentaires

(43) Veröffentlichungstag der Anmeldung: 24.06.2015
(73) Patentinhaber: Festa, Maurizio, 76185 Karlsruhe (DE)
(72) Erfinder: Festa, Maurizio, 76185 Karlsruhe (DE)
(74) Vertreter: Geitz Truckenmüller Lucht

(56) Entgegenhaltungen:
- WO-A1-02/096252
- WO-A1-02/102671
- WO-A1-2013/015345
- DE-A1- 19 742 277
- DE-A1-102012 104 892

## Beschreibung

Die vorliegende Erfindung betrifft einen Behälter zur Aufbewahrung und Zubereitung von Nahrungsmitteln, welcher einen Innenraum umschließt und einen Behältermantel und einen Behälterboden umfasst, wobei der Innenraum mithilfe zumindest einer Trennwand in wenigstens zwei gegeneinander flüssigkeitsdicht isolierte Teilräume unterteilt ist, wobei die Trennwand derart zerstörungsfrei aus dem Innenraum entnehmbar ist, dass die flüssigkeitsdichte gegenseitige Isolierung der Teilräume aufgegeben und eine Verbindung zwischen den Teilräumen hergestellt wird.

Ein solcher Gegenstand ist bereits aus der WO 2013/014345 A1 vorbekannt. Dort ist ein tellerförmiger Behälter vorgesehen, der durch eine Folie verdeckt wird. Mit der Folie kann eine Trennwand entfernt werden, die von der Folie senkrecht in den Behälter einragt und dabei vor dem Entfernen der Folie einen Verbindungsabschnitt zwischen zwei Teilräumen des Behälters dichtend verlegt.

Derartige Behälter sind in vielfältiger Art und Weise aus dem Stand der Technik bekannt. Sie werden für verschiedenste Nahrungsmittel eingesetzt, welche teilweise zur Erwärmung vorgesehen sind, in anderen Fällen sind solche Behälter beispielsweise im Zusammenhang mit Joghurtbechern vielfältig im Einsatz. In jedem Fall ist die grundsätzliche, zu Grunde liegende Idee diejenige, dass Nahrungsmittel zunächst in einer voneinander separierten Darreichungsform vorgelegt werden, so dass die Durchmischung der Nahrungsmittel durch den Konsumenten selbst durchgeführt werden kann. Dies verspricht zum einen eine größere Frische des Produktes, weil eine vollständige Durchdringung des einen Produktteils mit dem anderen Produktteil noch nicht erfolgt ist, zum anderen bekommt der Konsument die Möglichkeit, nach eigenem Geschmack auf die Durchmischung der Teilprodukte hinzuwirken.

Ein besonders bekanntes Beispiel für einen derartigen Behälter sind bekannte Joghurtbecher, welche in zwei Teilräume unterteilt sind, wobei ein Teilraum gegenüber dem anderen über eine Knickfalte beweglich zugeordnet ist. Durch ein Umknicken des einen Teilraums um die Knickfalte herum kann dessen Inhalt in den anderen Teilraum umgeleert werden, so dass eine Durchmischung der beiden Teilprodukte in dem vorzugsweise größeren Teilraum vorgenommen werden kann.

Ebenfalls ist aus dem Stand der Technik eine Konfiguration bekannt, in welcher der zweite, üblicherweise kleinere Teilraum als eingestellter Becher realisiert wird, welcher vollständig aus dem größeren Becher entnommen werden kann. Hierdurch steht im Gegensatz zu der oben genannten Lösung der Raum des kleineren Bechers zusätzlich für das Produkt zur Verfügung, so dass die Problematik einer möglichen Überfüllung des Bechers während der Zusammenführung der Produktteile bei der Befüllung nicht berücksichtigt werden muss.

Problematisch bei der ersten Lösung ist also zunächst, dass der zweite Teilraum für das Produkt am Ende nicht mehr zur Verfügung steht und dadurch genügend Freiraum freigehalten werden muss. Bei der zweiten Lösung aus dem Stand der Technik besteht die Problematik darin, den zweiten, aus dem größeren Becherteil entnehmbaren kleineren Becher vollständig zu entleeren, so dass man in den vollständigen Genuss des darin enthaltenen Produktes gelangt.

Vor diesem Hintergrund liegt der vorliegenden Erfindung daher die Aufgabe zu Grunde, einen Behälter zur Aufbewahrung und Zubereitung von Nahrungsmitteln vorzuschlagen, bei welchem zum einen der zur Verfügung stehende Raum des Bechers vollständig genutzt werden kann und zum anderen das vollständige Produkt möglichst rückstandsfrei nutzbar ist.

Gelöst wird diese Aufgabe durch einen Behälter zur Aufbewahrung und Zubereitung von Nahrungsmitteln gemäß den Merkmalen des Anspruchs 1. Weitere, sinnvolle Ausgestaltungen eines derartigen Behälters können den Unteransprüchen entnommen werden.

Erfindungsgemäß ist vorgesehen, dass zwischen den beiden gegeneinander flüssigkeitsdicht isolierten Teilräumen eine Trennwand angeordnet ist, welche zerstörungsfrei aus dem Innenraum entnommen werden kann. Durch ein Entnehmen der Trennwand aus dem Innenraum sollen die beiden Teilräume miteinander verbunden werden, wobei die flüssigkeitsdichte gegenseitige Isolierung der Teilräume aufgegeben wird. Mit anderen Worten wird aus zwei benachbarten Teilräumen eines Behälters eine Trennwand mehr oder weniger nach oben herausgezogen, so dass die Inhalte der beiden Teilräume ineinanderfließen können. Hierdurch steht sowohl dem Behälter nunmehr für das Produkt der komplette Innenraum des Behälters zur Verfügung, ferner kann das an der Wandung anhaftende Produkt beider Teilräume durch ein Vermischen des Produktes und ein damit einhergehendes Abstreifen von den Wänden ebenfalls vollständig genutzt werden. Es ergibt sich eine wesentlich effizientere Nutzung des Behälterinhalts für den Konsumenten.

Im Einzelnen kann dem Behältermantel und/oder dem Behälterboden eine Nut zugeordnet sein, in welche die Trennwand oder Teile davon aufgenommen werden. Hierdurch ist eine verbesserte Dichtigkeit der Verbindung zwischen der Trennwand und dem Behälterboden bzw. dem Behältermantel gewährleistet, so dass ein Durchdringen der Teilprodukte bei eingesetzter Trennwand vermieden ist. Der Konsument kann also durch ein einfaches Herausziehen der Trennwand bei bestehender Flüssigkeitsdichtigkeit beispielsweise eine Kammer mit Pasta einerseits mit einer Kammer mit einer Soße andererseits verbinden und in dem entstehenden gesamten Innenraum die beiden Teilprodukte miteinander vermischen. Entsprechendes lässt sich auch mit anderen Produkten bewerkstelligen, beispielsweise mit den Komponenten eines Cappuccino oder eines Joghurts.

Um die Einführung der Trennwand in eine vorgesehene Nut zu vereinfachen, kann die Trennwand eine Feder entlang ihrer Außenränder aufweisen, welche zum Einführen in die Nut des Behältermantels und/oder des Behälterbodens geeignet ist. Hierdurch ergibt sich ein zusätzlicher Labyrintheffekt im Bereich der ineinandergefügten Kanten der Trennwand und des Behälters, so dass eine größere Dichtigkeit gewährleistet werden kann. Der zu durchquerende Weg für ein Durchdringen dieser Verbindung wird deutlich länger.

An ihrer von dem Behälterboden wegweisenden Seite kann die Trennwand darüber hinaus ein Verstärkungselement aufweisen, welches ein Verbiegen der Trennwand verhindern soll. Das Verstärkungselement kann der Trennwand entweder angeformt sein oder beispielsweise durch eine Umkantung gebildet werden. Idealerweise kann das Verstärkungselement gemeinsam mit der Trennwand im Querschnitt entweder eine L-Form oder eine T-Form bilden. Jedoch sind auch andere Verstärkungselemente, durch Anformung oder Umkantung, bei der Trennwand möglich und ausdrücklich von der Erfindung mit umfasst.

Insbesondere angesichts des Umstandes, dass die Inhalte des Behälters gegebenenfalls vor dem Verzehr zu erwärmen sind, kann der Behältermantel und/oder der Behälterboden eine Isolation aufweisen, welche beispielsweise durch einen Isolationskern gebildet sein kann. Insoweit besteht der Behältermantel und/oder der Behälterboden aus einer Außenwandung und einer Innenwandung, welche zwischen sich diesen Isolationskern einschließen.Der Behälter ist dann zumindest teilweise hohl gebildet und mit einem Gas, beispielsweise mit Luft gefüllt, oder weist in diesem Hohlraum einen wärmedämmenden festen oder flüssigen Kern auf. Aufgrund dieser Isolation kann das in dem Behälter befindliche, zu erwärmende Produkt auch bei höheren Temperaturen keine Verbrennungen an den Händen des dem behälterhaltenden Konsumenten verursachen und erkaltet weniger schnell.

Neben der weit verbreiteten Möglichkeit, Speisen mithilfe von Mikrowellen aufzuwärmen, die insbesondere auch im Bereich der verzehrfertig vorbereiteten Nahrungsmittel genutzt werden, besteht die Möglichkeit, das Produkt wesentlich schonender mit Dampf zu erhitzen. Hierbei besteht regelmäßig die Problematik, eine gleichmäßige, möglichst vollständige Durchdringung des Produktes mit Dampf zu ermöglichen. Die Erfindung sieht, diesbezüglich vor, der Trennwand eine Dampfröhre zuzuordnen, welche von der vom Behälterboden weg weisenden Kante in Richtung des Behälterbodens verläuft. Eine solche Dampfröhre ist an der vom Behälterboden weg weisenden Kante über einen Dampfzugang zugänglich und weist im Bereich des Behälterbodens einen Dampfauslass auf. Der weit unten in das Produkt eintretende Dampf durchstreift das Produkt also von unten nach oben, nachdem der Dampf aufgrund seiner natürlichen Konvektion und thermodynamischen Ausdehnung oder auch aufgrund eines angelegten Dampfdrucks nach oben steigt. Um sicherzustellen, dass ein Durchdringen der beiden Teilprodukte auch über den Dampfauslass der Dampfröhre nicht erfolgen kann, weist mit einigem Vorteil die Dampfröhre wenigstens eine Röhrentrennwand auf, welche die Dampfröhre vollständig flüssigkeitsdicht teilt. Hierbei kann die Röhrentrennwand entweder bis zur oberen Kante der Dampfröhre verlaufen, oder bereits unterhalb der Oberkante der Dampfröhre abbrechen, um ein Einstecken einer Dampfzuführung in die Dampfröhre zu ermöglichen. Grundsätzlich ist vorgesehen, dass die Dampfröhre bis zur Oberkante der Trennwand geführt ist.

Im Einzelnen ist vorgesehen, dass es sich bei der Dampfröhre um eine zylindrische oder mehrkantige Röhre handelt, welche im Bereich des Behälterbodens in einer geeigneten Form, beispielsweise Kugelform, Kegelform oder Kegelstumpfform zuläuft. In dem kugelförmigen, kegelförmigen oder kegelstumpfförmigen Bereich, also im Bereich des Dampfauslasses, weist die Dampfröhre hierbei wenigstens eine Dampfaustrittsöffnung auf, über welche der durch den Dampfzugang in die Dampfröhre eingebrachte Dampf wahlweise in eine der beiden Teilräume oder in beide Teilräume eindringen kann.

In vorteilhafter Weiterbildung kann dem Dampfzugang ein Anschlussmittel zugeordnet sein, über welche die Dampfzuführeinrichtung mit dem Behälter verbunden werden kann. Hierbei kann es sich um eine dampfdichte Verbindung handeln, in welche die Dampfzuführung eingesteckt wird, jedoch auch eine Schraubverbindung oder dergleichen mehr ist grundsätzlich möglich. Zudem kann etwa durch Prä-Perforation eine Entlastungsöffnung vorgegeben sein, durch welche bei Anliegen eines Dampfdrucks der Dampf bedarfsweise entweichen kann.

Der Behälter kann mit einigem Vorteil hinsichtlich seines Innenraums mithilfe einer Abdeckfolie verschlossen sein, welche aber im Sinne dieser Erfindung nicht als Bestandteil des Behälters verstanden wird. Die Abdeckfolie kann mit dem oberen Rand des Behältermantels idealerweise flüssigkeitsdicht und/oder gasdicht verbunden sein, dies gilt soweit vorhanden auch für das entlang der Trennwand verlaufende Verstärkungselement, welches seinerseits eine Verbindungsfläche mit der Abdeckfolie bildet. Die Abdeckfolie kann im Bereich eines Dampfzugangs soweit vorhanden eine Aussparung aufweisen, so dass ein Einfüllen des Dampfes auch bei aufgesetzter Abdeckfolie möglich ist. Alternativ kann die Abdeckfolie im Bereich des Dampfzugangs separat einschneidbar sein, um den Dampfzugang zu eröffnen. Die Abdeckfolie ist durch Kleben, Prägen oder Schweißen mit dem Behälter verbunden und lässt sich nach dem Erwärmen leicht und rückstandsfrei von dem Behälter abziehen.

Mit einigem Vorteil ist der vorgesehene Behälter im Wesentlichen kegelstumpfförmig und somit als Becher ausgestaltet. Die bevorzugten Herstellungsmaterialien sind Polypropylen, Polyethylen einschließlich C-PET, Glas, Aluminium oder Karton. Ebenfalls ist es ohne Weiteres möglich, eine Mischung bzw. Zusammenstellung dieser Materialien zur Herstellung des Behälters zu verwenden.

Die vorstehend beschriebene Erfindung wird im Folgenden anhand eines Ausführungsbeispiels näher erläutert.

Es zeigen
- Figur 1: einen Behälter mit einer Trennwand in einer Draufsicht von oben,
- Figur 2: den Behälter gemäß Figur 1 mit einem Anschnitt wie in Figur 1 angedeutet, mit eingesetzter Trennwand in einer perspektivischen Darstellung von schräg oben,
- Figur 3: den Behälter gemäß Figur 2 mit halb herausgehobener Trennwand in einer perspektivischen Darstellung von schräg oben,
- Figur 4: die herausgenommene Trennwand aus den Figuren 1 bis 3 in einer separierten Darstellung, perspektivisch von schräg oben,
- Figur 5: eine Detaildarstellung aus Figur 4,
- Figur 6: eine Detaildarstellung eines Schnitts durch den Rand des Behälters gemäß der vorliegenden Erfindung in einem Detail einer Querschnittsdarstellung, sowie
- Figur 7: eine Detaildarstellung eines Querschnitts der Trennwand im Bereich des Behälterbodens.

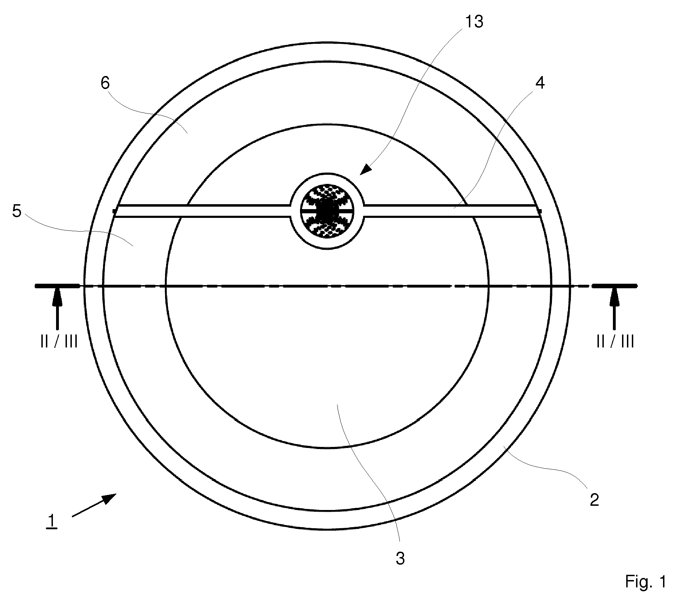

Figur 1 zeigt einen Behälter 1 mit einem Behältermantel 2, welcher konisch zulaufend ist und einen Behälterboden 3 aufweist. Der Innenraum des Behälters 1 ist mithilfe einer Trennwand 4 in einen ersten Teilraum 5 und einen zweiten Teilraum 6 unterteilt. In dem ersten Teilraum 5 kann insoweit ein erstes Teilprodukt enthalten sein, welches von einem im zweiten Teilraum 6 aufgenommenen zweiten Teilprodukt separat gehalten werden soll. Beispielsweise kann es sich hierbei bei dem Produkt in dem ersten Teilraum 5 um Pasta, bei dem Produkt im zweiten Teilraum 6 um eine dazugehörige Soße handeln. Die Trennwand 4 weist eine mittig angeordnete Dampfröhre 13 auf, welche zylindrisch gebildet und durch eine mittlere Röhrentrennwand 16 in zwei Hälften geteilt ist.

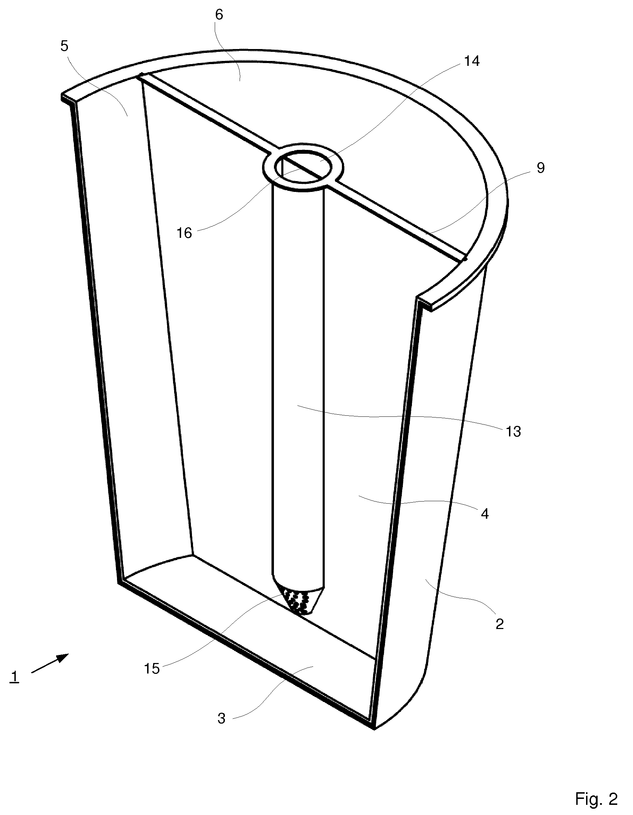

Figur 2 zeigt den Behälter 1 in einer perspektivischen Ansicht, in welcher die Längserstreckung der Dampfröhre 13 zu erkennen ist. Die von der Röhrentrennwand 16 geteilte Dampfröhre 13 verläuft von einer Oberkante der Trennwand 4 aus bis in den Bereich des Behälterbodens 3, wo die Dampfröhre 13 in einen kegelstumpfförmigen Dampfauslass 15 mündet. Zur Erwärmung des in dem Behälter 1 enthaltenen Produkts kann nunmehr über einen Dampfzugang 14, welcher an dem vom Behälterboden 3 wegweisenden Ende der Dampfröhre 13 gebildet ist, eine Dampfzuführung angeschlossen werden, welche Dampf in die Dampfröhre 13 einbläst. Dieser wird sich über den Dampfauslass 15 in den beiderseits der Dampfröhre 13 befindlichen Teilräumen 5 und 6 verteilen, so dass die darin enthaltenen Teilprodukte jeweils separat für sich erwärmt werden. Der von der Dampfzuführung in die Dampfröhre 13 eingeblasene Dampf wird aufgrund der Röhrentrennwand 16 sich seinerseits ebenfalls nicht durchmischen, sondern den beiden Teilräumen 5 und 6 separat zugeführt werden.

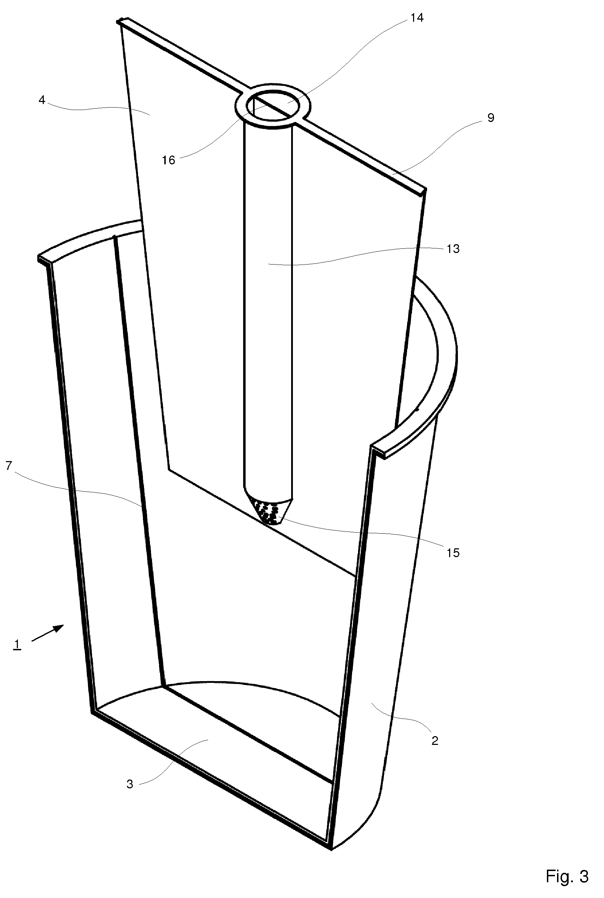

Figur 3 zeigt eine zerstörungsfreie Entnahme der Trennwand 4 aus dem Behälter 1, was durch ein einfaches Herausheben der Trennwand 4 aus dem Behälter 1 erfolgen kann. Die Trennwand 4 ist hierbei in eine Nut 7 in Behältermantel 2 und Behälterboden 3 in ihrer Position gehalten, so dass diese durch ein einfaches Herausheben aus dem Behälter entfernt werden kann. In diesem Moment werden die beiden Teilprodukte, welche in den beiden Teilräumen 5 und 6 enthalten gewesen sind sich in einem gemeinsamen Innenraum des Behälters 1 wiederfinden und einander von beiden Seiten her durchdringen. Eine weitere Durchmischung kann sowohl mit der Trennwand 4 vorgenommen werden, als diese auch über ein einfaches Abstreifen an den Behälterrändern entfernt werden kann.

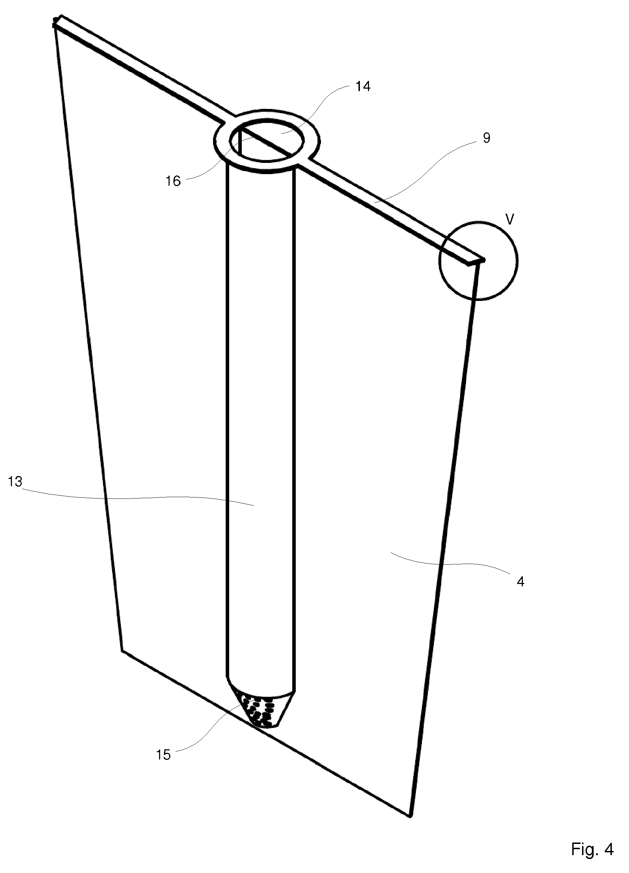

Figur 4 zeigt die entfernte Trennwand 4 nochmals im Detail. Die Trennwand 4 ist über eine bestimmungsgemäß von dem Behälterboden 3 weg weisendes Verstärkungselement 9 verstärkt, welches der Trennwand 4 angeformt ist. Hierdurch besitzt die Trennwand 4 im Querschnitt eine T-Form, so dass eine Verbiegung verhindert ist, welche zu einem Herausrutschen der Kanten der Trennwand 4 aus der Nut 7 in Behältermantel 2 und Behälterboden 3 führen würde. Ferner bildet das Verstärkungselement 9 eine Fläche, über welche eine hier nicht näher gezeigte, leicht abziehbare Abdeckfolie mit der Trennwand 4 verbunden werden kann, um einen Übertritt der Teilprodukte in den jeweils anderen Teilraum 5 oder 6, beispielsweise durch ein Kippen des Behälters, zu verhindern. Das Verstärkungselement 9 kann hierbei derart gebildet sein, dass es um die Dampfröhre 13 herum geführt ist, so dass auch der Dampfzugang 14 der Dampfröhre 13 mit der Abdeckfolie direkt verbunden werden könnte.

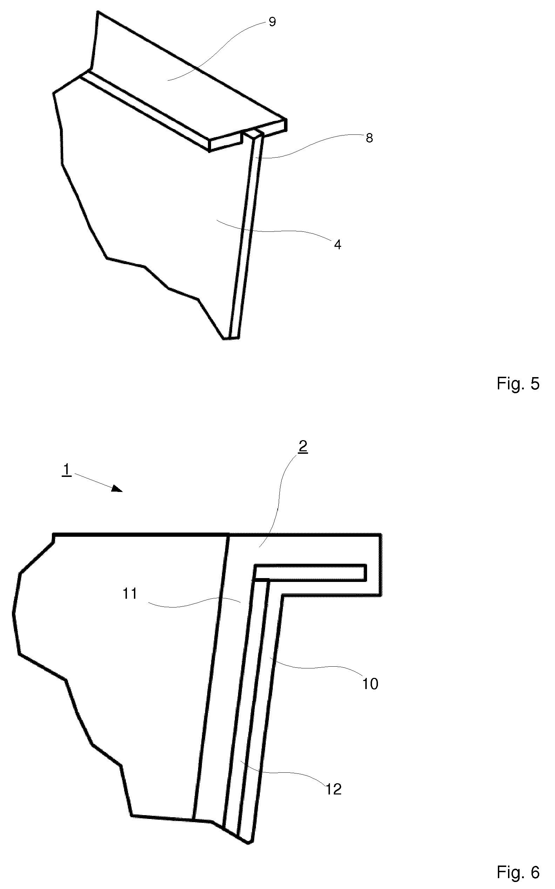

Figur 5 zeigt ein in Figur 4 markiertes Detail der Trennwand 4, in welchem zum einen die T-förmige Gestaltung verdeutlicht wird, zum anderen wird deutlich, dass am Rand der Trennwand 4 eine nicht verjüngte Feder 8 gebildet wird, welche in die Nut 7 des Behälters 1 eingeführt werden kann.

Figur 6 zeigt ein Detail des Bechermantels 2, welcher im Wesentlichen hohl gebildet ist. Hierzu weist der Behälter 1 im Bereich seiner Wandungen eine Außenwandung 10 und eine Innenwandung 11 auf, zwischen denen ein Isolationskern 12 eingeschlossen ist. Dieser Isolationskern kann insbesondere mit Luft gefüllt sein, jedoch auch ein anderes isolierendes Material enthalten. Hierdurch wird gewährleistet, dass eine Übertragung der innerhalb des Behälters 1 herrschenden Temperatur nach außen, also an die Hände des Konsumenten, nicht weitergegeben wird. Dies vermeidet zum einen eine Verbrennung des Konsumenten und zum anderen hält dies das einmal erwärmte Produkt in dem Behälter 1 warm.

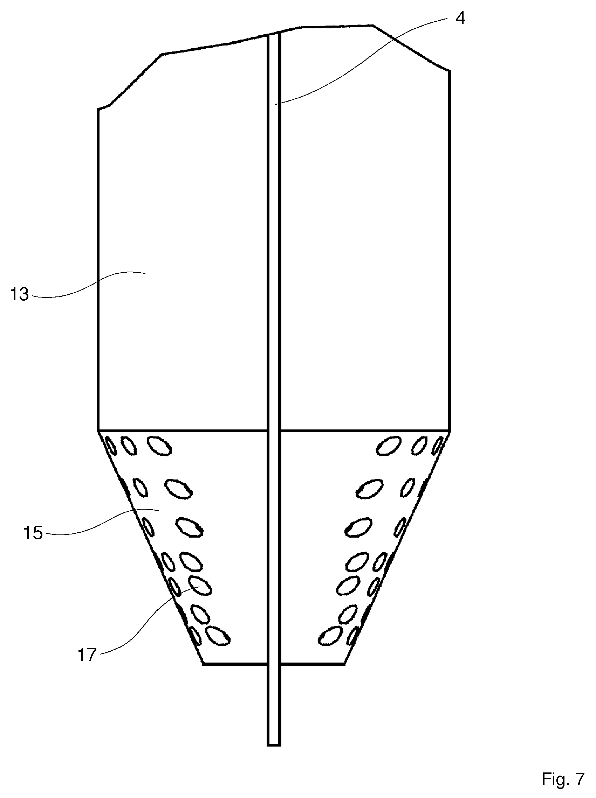

Figur 7 zeigt schließlich ein Detail der Dampfröhre 13, dort insbesondere den Dampfauslass 15. Die Dampfröhre 13 ist durch die Trennwand 4 und insbesondere die innerhalb der Dampfröhre 13 verlaufende Röhrentrennwand 16 in zwei Hälften geteilt, in welchen der Dampf separat für die beiden Teilräume 5 und 6 geführt werden kann. Der Dampfauslass 15 weist hierbei eine Mehrzahl von Dampfaustrittsöffnungen 17 auf, über die der Dampf aus der Dampfröhre 13 in den jeweiligen Teilraum 5 oder 6 entweichen kann.

Vorstehend beschrieben ist somit ein Behälter zur Aufbewahrung und Zubereitung von Nahrungsmitteln, welcher zum einen leichter zu handhaben ist als die bekannten Behälter aus dem Stand der Technik, weil eine Überfüllung einzelner Teilbehälter aufgrund der Konstruktion vermieden ist, und andererseits das Produkt möglichst vollständig dem Konsumenten zur Verfügung gestellt wird.

Die Anordnung einer Dampfröhre eine schonende und effiziente Erwärmung des Produktes ermöglicht.

## Patentansprüche

1. Behälter zur Aufbewahrung und Zubereitung von Nahrungsmitteln, welcher einen Innenraum umschließt und einen Behältermantel (2) sowie einen Behälterboden (3) umfasst, wobei der Innenraum mithilfe zumindest einer Trennwand (4) in wenigstens zwei gegeneinander flüssigkeitsdicht isolierte Teilräume (5, 6) unterteilt ist, wobei
die Trennwand (4) derart zerstörungsfrei aus dem Innenraum entnehmbar ist, dass die flüssigkeitsdichte gegenseitige Isolierung der Teilräume (5, 6) aufgegeben und eine Verbindung zwischen den Teilräumen (5, 6) hergestellt wird,
**dadurch gekennzeichnet, dass** die Trennwand (4) eine von der vom Behälterboden weg weisenden Kante her über einen Dampfzugang (14) zugängliche Dampfröhre (13) zur Beschickung des Innenraums mit Dampf aufweist, die im Bereich des Behälterbodens (3) in einen Dampfauslass (15) mündet.

2. Behälter gemäß Anspruch 1, **dadurch gekennzeichnet, dass** dem Behältermantel (2) und/oder dem Behälterboden (3) eine Nut (7) zur Aufnahme von Teilen der Trennwand (4) zugeordnet ist.

3. Behälter gemäß Anspruch 2, **dadurch gekennzeichnet, dass** die Trennwand (4) eine um ihren Außenrand verlaufende Feder (8) zum Einführen in die Nut (7) des Behältermantels (2) und/oder des Behälterbodens (3) aufweist.

4. Behälter gemäß einem der vorhergehenden Ansprüche, **dadurch gekennzeichnet, dass** die Trennwand (4) an ihrer von dem Behälterboden (3) weg weisenden Kante ein Verstärkungselement (9) derart aufweist, dass die Trennwand (4) im Querschnitt eine T- oder L-Form aufweist.

5. Behälter gemäß Anspruch 4, **dadurch gekennzeichnet, dass** es sich bei dem Verstärkungselement um eine Umkantung oder ein angeformtes Verstärkungselement (9) handelt.

6. Behälter gemäß einem der vorhergehenden Ansprüche, **dadurch gekennzeichnet, dass** der Behältermantel (2) und/oder der Behälterboden (3) eine Außenwandung (10) und eine Innenwandung (11) aufweisen, welche zwischen sich einen Isolationskern (12) aus einem wärmedämmenden festen oder flüssigen Material oder einem Gas einschließen.

7. Behälter gemäß einem der vorhergehenden Ansprüche, **dadurch gekennzeichnet, dass** die Dampfröhre (13) ihrerseits vermittels wenigstens einer Röhrentrennwand (16) flüssigkeitsdicht geteilt ist.

8. Behälter gemäß einem der vorhergehenden Ansprüche, **dadurch gekennzeichnet, dass** die Dampfröhre (13) als zylindrische oder mehrkantige Röhre gebildet ist, welche im Bereich des Behälterbodens (3) kugelförmig, kegelförmig oder kegelstumpfförmig zuläuft.

9. Behälter gemäß einem der vorhergehenden Ansprüche, **dadurch gekennzeichnet, dass** die Dampfröhre (13) im Bereich des Behälterbodens (3) wenigstens eine den Dampfauslass bildende Dampfaustrittsöffnung (17) aufweist.

10. Behälter gemäß einem der vorhergehenden Ansprüche, **dadurch gekennzeichnet, dass** dem Dampfzugang (14) ein Anschlussmittel zur dampfdichten Verbindung mit einer Dampfzuführeinrichtung zugeordnet ist.

11. Behälter gemäß einem der vorhergehenden Ansprüche, **dadurch gekennzeichnet, dass** der Innenraum an seiner von dem Behälterboden (3) weg weisenden Seite von einer Abdeckfolie übergriffen und flüssigkeitsdicht und/oder gasdicht verschlossen ist.

12. Behälter gemäß Anspruch 11, **dadurch gekennzeichnet, dass** die Abdeckfolie im Bereich des Dampfzugangs (14) eine Aussparung aufweist.

13. Behälter gemäß einem der vorhergehenden Ansprüche, welcher im Wesentlichen kegelstumpfförmig geformt ist.

14. Behälter gemäß einem der vorhergehenden Ansprüche, welcher aus Polypropylen, Polyethylen, Glas Aluminium oder Karton hergestellt ist.

## Claims

1. A container for storing and preparing foodstuff, which encloses an interior space and comprises a container jacket (2) and a container base (3), wherein the interior space is subdivided by means of at least one partition wall (4) into at least two compartments (5, 6) which are insulated in a liquid-tight manner with respect to each other, wherein the partition wall (4) can be removed in a destruction-free manner from the interior space in such a way that the mutual liquid-tight insulation of the compartments (5, 6) is relinquished and a connection between the compartments (5, 6) is produced, **characterized in that** the partition wall (4) comprises a vapour tube (13) for feeding the interior space with vapour, which vapour tube is accessible from an edge facing away from the container base via a vapour inlet (14) and which opens into a vapour outlet (15) in the region of the container base (3).

2. A container according to claim 1, **characterized in that** the container jacket (2) and/or the container base (3) is associated with a groove (7) for accommodating parts of the partition wall (4).

3. A container according to claim 2, **characterized in that** the partition wall (4) comprises a spring (8) extending around its exterior edge for insertion into the groove (7) of the container jacket (2) and/or the container base (3).

4. A container according to one of the preceding claims, **characterized in that** the partition wall (4) comprises a reinforcing element (9) at its edge facing away from the container base (3) in such a way that the partition wall (4) is T-shaped or L-shaped in its cross-section.

5. A container according to claim 4, **characterized in that** the reinforcing element concerns a folded edge or an integrally attached reinforcing element (9).

6. A container according to one of the preceding claims, **characterized in that** the container jacket (2) and/or the container base (3) comprise an outer wall (10) and an inner wall (11), which between themselves enclose an insulating core (12) made of a heat-insulating solid or liquid material or a gas.

7. A container according to one of the preceding claims, **characterized in that** the vapour tube (13) is divided in a liquid-tight manner by means of at least one tube separating wall (16).

8. A container according to one of the preceding claims, **characterized in that** the vapour tube (13) is formed as a cylindrical or multi-edged tube, which tapers in the region of the container base (3) in a spherical, conical or frustroconical manner.

9. A container according to one of the preceding claims, **characterized in that** the vapour tube (13) comprises in the region of the container base (3) at least one vapour outlet opening (17) which forms the vapour outlet.

10. A container according to one of the preceding claims, **characterized in that** a connection means for the vapour-tight connection with a vapour feed device is assigned to the vapour inlet (14).

11. A container according to one of the preceding claims, **characterized in that** the interior space, on its side facing away from the container base (3), is overlapped by a cover film and is sealed in a liquid-tight and/or gas-tight manner.

12. A container according to claim 11, **characterized in that** the cover film comprises a recess in the region of the vapour inlet (14).

13. A container according to one of the preceding claims, which is substantially formed in the manner of a truncated cone.

14. A container according to one of the preceding claims, which is made of polypropylene, polyethylene, glass, aluminium or cardboard.

## Revendications

1. Récipient pour la conservation et la préparation d'aliments, qui renferme un espace intérieur et comprend une enveloppe de récipient (2) ainsi qu'un fond de récipient (3), l'espace intérieur étant partagé à l'aide d'au moins une cloison de séparation (4) en au moins deux compartiments (5, 6) isolés l'un de l'autre de façon étanche aux liquides,
la cloison de séparation (4) pouvant être retirée de façon non destructrice de l'espace intérieur de telle manière que l'isolation étanche au liquide entre les compartiments (5, 6) soit abolie et qu'une communication s'établisse entre les compartiments (5, 6),
**caractérisé en ce que** la cloison de séparation (4) présente un tuyau de vapeur (13) accessible via une entrée de vapeur (14) par le bord éloigné du fond du récipient pour remplir l'espace intérieur de vapeur, lequel débouche au niveau du fond du récipient (3) dans une sortie de vapeur (15).

2. Récipient selon la revendication 1, **caractérisé en ce que** l'enveloppe du récipient (2) et/ou le fond de récipient (3) sont associés à une rainure (7) destinée à recevoir des parties de la cloison de séparation (4).

3. Récipient selon la revendication 2, **caractérisé en ce que** la cloison de séparation (4) présente sur son bord extérieur une languette (8) destinée à s'introduire dans la rainure (7) de l'enveloppe de récipient (2) et/ou du fond du récipient (3).

4. Récipient selon l'une des revendications précédentes, **caractérisé en ce que** la cloison de séparation (4) présente un élément de renfort (9) sur son bord éloigné du fond de récipient (3), de telle manière que la cloison de séparation (4) présente une forme de T ou de L en section.

5. Récipient selon la revendication 4, **caractérisé en ce que** l'élément de renfort est un retournement du bord ou un élément de renfort (9) formé lors du moulage.

6. Récipient selon l'une des revendications précédentes, **caractérisé en ce que** l'enveloppe de récipient (2) et/ou le fond de récipient (3) présentent une paroi extérieure (10) et une paroi intérieure (11) qui renferment entre elles un noyau isolant (12) fait d'un matériau solide ou liquide isolant thermique ou d'un gaz.

7. Récipient selon l'une des revendications précédentes, **caractérisé en ce que** le tuyau de vapeur (13) est divisé de façon étanche aux liquides au moyen d'au moins une cloison de tuyau (16).

8. Récipient selon l'une des revendications précédentes, **caractérisé en ce que** le tuyau de vapeur (13) est conformé comme un tuyau cylindrique ou polygonal qui prend une forme sphérique, conique ou tronconique vers le fond du récipient (3).

9. Récipient selon l'une des revendications précédentes, **caractérisé en ce que** le tuyau de vapeur (13) présente au niveau du fond du récipient (3) au moins une ouverture d'échappement de vapeur (17) formant la sortie de vapeur.

10. Récipient selon l'une des revendications précédentes, **caractérisé en ce que** l'entrée de vapeur (14) est associée à un moyen de raccordement pour une liaison étanche à la vapeur avec un dispositif d'arrivée de vapeur.

11. Récipient selon l'une des revendications précédentes, **caractérisé en ce que** l'espace intérieur est entouré par un film de couverture du côté opposé au fond de récipient (3) et fermé de façon étanche aux liquides et/ou aux gaz.

12. Récipient selon la revendication 11, **caractérisé en ce que** le film de couverture présente une ouverture au niveau de l'entrée de vapeur (14).

13. Récipient selon l'une des revendications précédentes, qui a une forme sensiblement tronconique.

14. Récipient selon l'une des revendications précédentes, qui est fabriqué à partir de polypropylène, de polyéthylène, de verre, d'aluminium ou de carton.
